**Europäisches Patentamt**

**European Patent Office**

**Office européen des brevets**

(11) Numéro de publication : **0 371 831 B1**

# (12) FASCICULE DE BREVET EUROPEEN

(45) Date de publication du fascicule du brevet :
02.12.92 Bulletin 92/49

(51) Int. Cl.⁵ : **B60T 13/567**

(21) Numéro de dépôt : **89402824.0**

(22) Date de dépôt : **13.10.89**

---

## (54) **Dispositif de montage d'un servomoteur sur un tablier de véhicule.**

---

(30) Priorité : **30.11.88 FR 8815678**

(43) Date de publication de la demande :
**06.06.90 Bulletin 90/23**

(45) Mention de la délivrance du brevet :
**02.12.92 Bulletin 92/49**

(84) Etats contractants désignés :
**DE ES FR GB IT**

(56) Documents cités :
**EP-A- 0 237 148**
**US-A- 4 269 533**

(73) Titulaire : **BENDIX EUROPE Services**
**Techniques S.A.**
**126 rue de Stalingrad**
**F-93700 Drancy (FR)**

(72) Inventeur : **Gautier, Jean-Pierre**
**Bendix France 126 Rue de Stalingrad**
**F-93700 Drancy (FR)**
Inventeur : **Verbo, Pedro**
**Bendix France 126 Rue de Stalingrad**
**F-93700 Drancy (FR)**

# Description

L'invention concerne un dispositif permettant de monter de façon particulièrement simple, par exemple à l'aide d'un robot, un servomoteur tel qu'un servomoteur d'assistance au freinage sur un tablier de véhicule automobile.

Lors de la fabrication à la chaîne des véhicules automobiles, la facilité de montage de chacun des organes constituant ce véhicule constitue un élément important puisqu'un gain de temps relativement modeste dans le montage de certains de ces éléments peut avoir pour conséquence, en sortie de chaîne, une augmentation appréciable de la cadence.

Cette facilité de montage est aussi appréciable lorsque certains organes doivent être remplacés au cours de la vie du véhicule.

L'invention a précisément pour objet un dispositif de montage d'un servomoteur tel qu'un servomoteur d'assistance au freinage sur un tablier de véhicule, ce dispositif étant conçu de manière particulièrement simple et rationnelle, afin de permettre notamment un montage robotisé du servomoteur.

Le document EP-A-0 237 148 décrit un dispositif de montage de ce type. Selon ce document, le dispositif de montage d'un servomoteur sur le tablier séparant un côté moteur et un côté habitacle d'un véhicule, comprend un moyen de support et un moyen de verrouillage du servomoteur par rapport au tablier ; le servomoteur est disposé côté moteur du tablier et comprend un boîtier dont une face arrière, sensiblement normale à l'axe du servomoteur fait face au tablier ; le moyen de support inclut un élément de support solidaire de la face arrière du servomoteur, coopérant avec un élément de support complémentaire solidaire du tablier ; le moyen de verrouillage est disposé côté moteur.

Ce dispositif présente l'inconvénient majeur pour une robotisation du montage, de nécessiter un poussoir présentant lors du montage un angle important par rapport à sa position normale, ainsi qu'un moyen de verrouillage dont l'axe est tel qu'il est très difficilement accessible.

Pour pallier ces inconvénients, selon l'invention, le moyen de verrouillage est constitué par au moins un ensemble vis-écrou dont l'axe est dans une direction orthogonale à celui du servomoteur.

Dans un premier mode de réalisation préféré de l'invention, les éléments de support sont constitués de deux paires de plaques faisant saillie l'une vers l'autre, respectivement à partir de ladite face arrière et dudit tablier, les plaques de chaque paire étant disposées de part et d'autre dudit axe et espacées de telle manière qu'une surface de chaque plaque d'une paire est en contact avec une surface correspondante de chaque plaque de l'autre paire.

Avantageusement, afin de permettre la mise en place du servomoteur sur le tablier du véhicule, avant sa fixation, l'élément de support solidaire de ladite face arrière comporte un élément d'accrochage coopérant avec ledit élément de support solidaire dudit tablier.

En variante, les éléments de support peuvent aussi être constitués par des pièces de révolution ou par des pièces de section polygonales coaxiales.

De préférence, le moyen de support comprend également un moyen de positionnement axial relatif des éléments de support, tel qu'une encoche pratiquée dans l'un de ces éléments.

Différents modes de réalisation de l'invention vont à présent être décrits, en se référant aux dessins annexés, dans lesquels :

- la figure 1 est une vue en perspective éclatée illustrant un premier mode de réalisation d'un dispositif de montage d'un servomoteur sur un tablier de véhicule conformément à l'invention ;
- la figure 2 est une vue en coupe du dispositif de montage de la figure 1 ;
- la figure 3 est une vue en perspective éclatée illustrant un deuxième mode de réalisation de l'invention ;
- la figure 4 est une vue en coupe du dispositif de montage de la figure 3 ; et
- la figure 5 est une vue en coupe selon un plan horizontal illustrant un troisième mode de réalisation de l'invention, les moitiés haute et basse de cette figure représentant deux variantes de ce mode de réalisation.

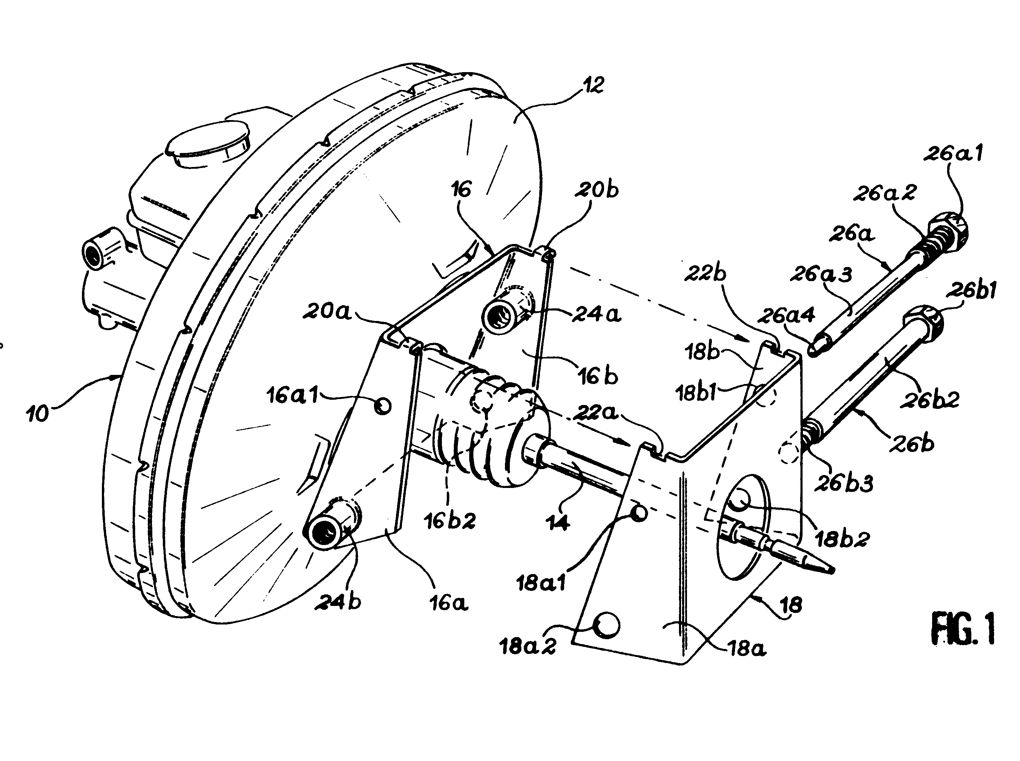

Sur la figure 1, la référence 10 désigne de façon générale un servomoteur d'assistance au freinage. Ce servomoteur, de conception classique, comporte un boîtier 12 présentant une symétrie de révolution autour d'un axe coïncidant avec l'axe d'une tige d'actionnement 14 du servomoteur, prévue pour être reliée à la pédale de frein (non représentée) du véhicule.

Conformément à l'invention, la face du boîtier 12 du servomoteur tournée vers l'arrière du véhicule, appelée face arrière, supporte de part et d'autre de la tige d'actionnement 14 deux plaques planes 16a et 16b orientées parallèlement entre elles et à l'axe du servomoteur et faisant saillie vers l'arrière à partir de cette face arrière. Lorsque le servomoteur 10 est installé sur le véhicule, ces plaques 16a et 16b sont approximativement verticales. Dans l'exemple de réalisation illustré sur la figure 1, les plaques 16a et 16b sont réalisées dans une tôle unique désignée de façon générale par la référence 16, repliée pour présenter en section la forme d'un U dont les branches d'extrémité constituent les plaques 16a et 16b. Cette tôle 16 est fixée sur la face arrière du boîtier 12 par la branche intermédiaire du U, dans laquelle est formé un passage circulaire traversé par la tige d'actionnement 14 et par une partie tubulaire du boîtier faisant saillie vers l'arrière.

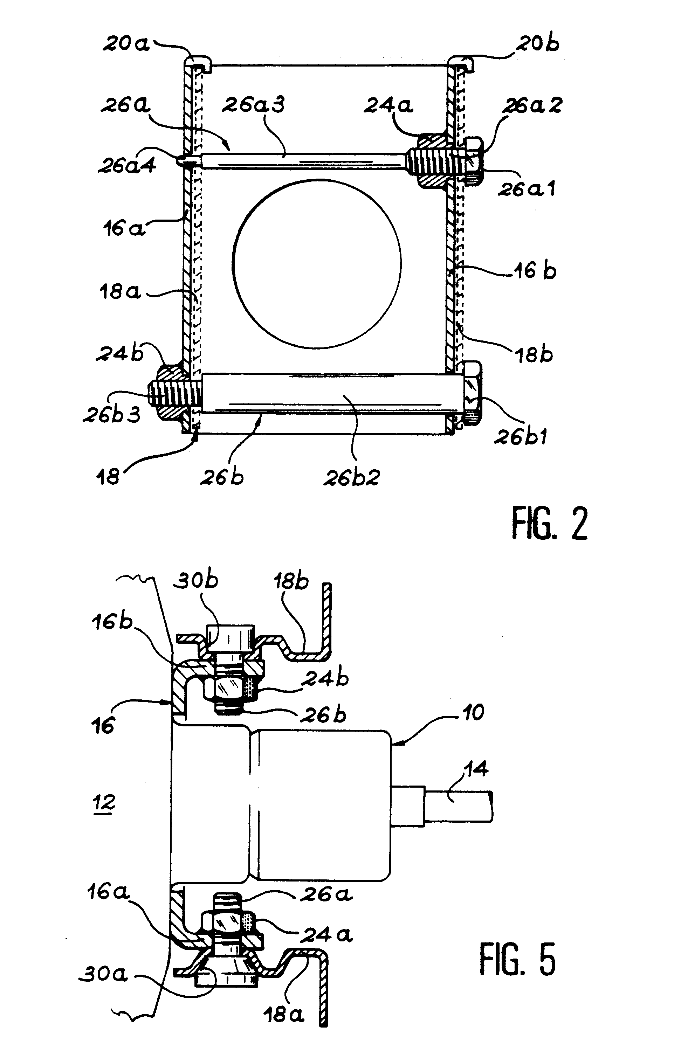

Le dispositif de montage selon l'invention comporte également une deuxième paire de plaques parallèles 18a et 18b fixées sur le tablier (non représenté) du véhicule, servant à séparer dans ce dernier le compartiment moteur de l'habitacle. Les plaques 18a et 18b sont parallèles entre elles et font saillie vers l'avant à partir du tablier du véhicule, en étant disposées approximativement verticalement lorsque l'assiette du véhicule est horizontale. Dans le mode de réalisation des figures 1 et 2, l'écartement entre les plaques 18a et 18b est le même que l'écartement entre les plaques 16a et 16b. De plus, les plaques 18a et 18b sont formées dans une tôle unique 18, repliée pour former un U dont les branches d'extrémité forment ces plaques et dont la branche intermédiaire permet la fixation de la pièce 18 sur le tablier du véhicule. Dans sa partie centrale, la branche intermédiaire de la pièce 18 comporte également un trou circulaire que traverse la tige d'actionnement 14 du servomoteur 10.

Comme l'illustre plus précisément la figure 2, les plaques 16a et 16b liées au boîtier du servomoteur 10 et les plaques 18a et 18b liées au tablier du véhicule sont prévues pour être disposées de telle façon que la face intérieure de la plaque 16a soit en contact avec la face extérieure de la plaque 18a, alors que la face extérieure de la plaque 16b est en contact avec la face intérieure de la plaque 18b.

Afin de permettre le positionnement axial du servomoteur 10 par rapport au tablier du véhicule, avant la mise en place de moyens de fixation qui seront décrits ultérieurement, chacune des plaques 16a et 16b liées au servomoteur porte une patte repliée 20a, 20b respectivement, faisant saillie à partir du bord supérieur de ces plaques. Ces pattes 20a et 20b sont repliées respectivement vers l'intérieur et vers l'extérieur pour former des éléments d'accrochage aptes à venir reposer sur des encoches complémentaires 22a, 22b formées respectivement dans les plaques 18a et 18b liées au tablier du véhicule.

Dans le mode de réalisation illustré sur les figures 1 et 2, la fixation du servomoteur 10 sur le tablier du véhicule est assurée par deux ensembles ou systèmes vis-écrous disposés respectivement au-dessus et en dessous de l'axe de symétrie du servomoteur.

Un premier de ces ensembles vis-écrou, disposé au-dessus de l'axe de symétrie du servomoteur, comprend un écrou 24a soudé sur la face intérieure de la plaque 16b et une vis 26a. La vis 26a traverse successivement les plaques 18b, 16b, 18a et 16a, et présente une forme en gradin depuis sa tête 26a1, qui vient en appui sur la face extérieure de la plaque 18b, jusqu'à son extrémité. De façon plus précise, la vis 26a comporte une partie filetée 26a2 adjacente à sa tête, traversant un trou 18b1 formé dans la plaque 18b et qui vient se visser dans l'écrou 24a, une partie intermédiaire 26a3 de diamètre inférieur au diamètre minimum de la partie filetée 26a2, et une partie terminale 26a4 de diamètre inférieur au diamètre de la partie intermédiaire 26a3. Cette partie terminale traverse deux trous de diamètre réduit 18a1, 16a1 formés respectivement dans les plaques 18a et 16a. Lorsque la tête de la vis 26a est en appui sur la face extérieure de la plaque 18b, l'épaulement formé entre la partie intermédiaire 26a3 et la partie terminale 26a4 de cette vis est en appui sur la plaque 18a de façon à plaquer celle-ci contre la plaque 16a. La vis 26a assure ainsi un rôle d'entretoise.

Le deuxième ensemble vis-écrou situé en dessous de l'axe du servomoteur 10 comprend un écrou 24b soudé sur la face extérieure de la plaque 16a et une vis 26b. Cette dernière traverse successivement les plaques 18b, 16b, 18a et 16a. Elle présente également une forme étagée depuis sa tête 26b1, qui est en appui sur la face extérieure de la plaque 18b, jusqu'à son extrémité. De façon plus précise, la vis 26b comporte une partie intermédiaire cylindrique 26b2, qui traverse des trous 18b2, 16b2 formés à cet effet dans les plaques 18b et 16b, et une partie terminale filetée 26b3, de diamètre inférieur au diamètre de la partie intermédiaire cylindrique 26b2. La partie terminale filetée 26b3 de la vis 26 traverse un trou 18a2 formé à cet effet dans la plaque 18a et vient se visser dans l'écrou 24b. L'épaulement formé entre la partie intermédiaire cylindrique 26b2 et la partie terminale filetée 26b3 de la vis 26b vient en appui sur la face intérieure de la plaque 18a lorsque la tête de la vis est en appui sur la face extérieure de la plaque 18b. La vis 26b assure donc, elle aussi, un rôle d'entretoise.

Grâce à l'agencement qui vient d'être décrit, le montage du servomoteur 10 sur le tablier du véhicule peut être assuré par un robot réalisant, dans un premier temps, le positionnement des pattes 20a et 20b sur les encoches 22a et 22b et, dans un second temps, le vissage des vis 26a et 26b dans les écrous 24a et 24b par un même côté de l'assemblage, grâce notamment à l'orientation des ensembles vis-écrous traversant les plaques selon une direction orthogonale à l'axe du servomoteur.

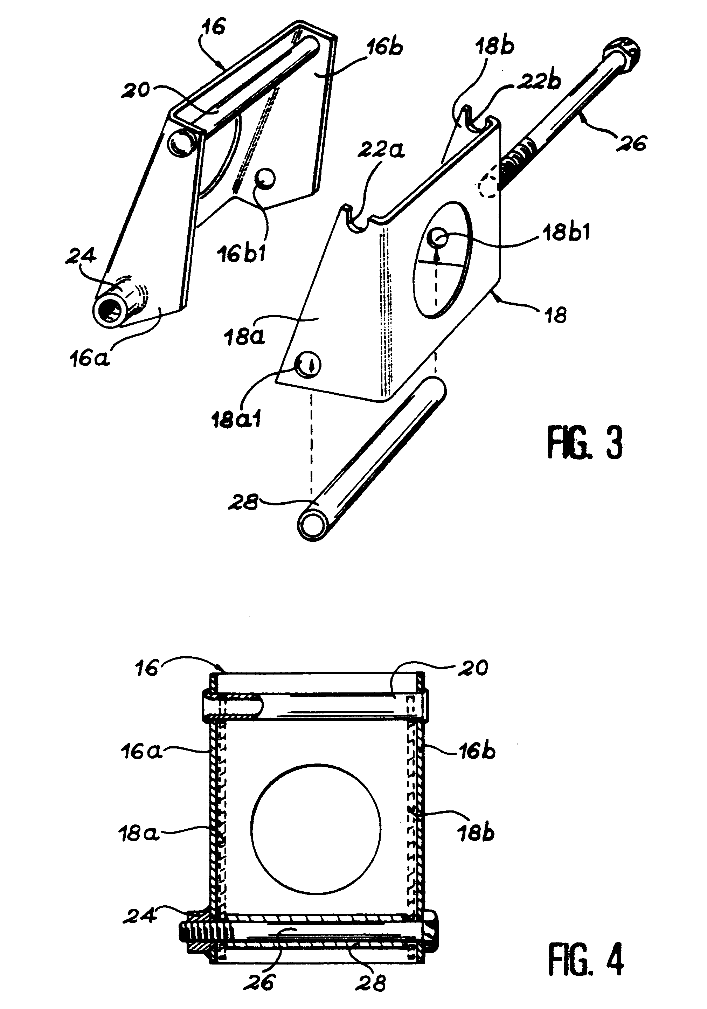

Dans un deuxième mode de réalisation illustré sur les figures 3 et 4, la face arrière du servomoteur porte également deux plaques 16a et 16b réalisées dans une tôle unique 16 et dont l'orientation est analogue à celle des plaques 16a et 16b du premier mode de réalisation. De même, le tablier du véhicule porte deux plaques parallèles 18a et 18b réalisées dans une tôle unique 18 et orientées de la même manière que les plaques 18a et 18b du premier mode de réalisation.

Une première différence avec le premier mode de réalisation réside dans le fait que les plaques 16a et 16b liées au servomoteur sont prévues pour venir se placer de part et d'autre des plaques 18a et 18b liées au tablier du véhicule, les faces intérieures des plaques 16a et 16b étant en contact avec les faces extérieures des plaques 18a et 18b, respectivement. Il en résulte que l'écartement entre les plaques 18a et 18b est légèrement inférieur à l'écartement entre les plaques 16a et 16b.

Une deuxième différence avec le premier mode de réalisation concerne les moyens permettant de positionner le servomoteur sur le tablier du véhicule avant d'en assurer la fixation. Dans le mode de réalisation des figures 3 et 4, ce positionnement est assuré par un organe d'accrochage unique constitué par une tige 20, par exemple de forme tubulaire, reliant les plaques 16a et 16b à proximité de leur bord supérieur et orientée perpendiculairement à ces plaques, de façon à prendre une position horizontale lorsque le servomoteur est monté sur le véhicule. Compte tenu de la forme extérieure cylindrique de la tige 20, les encoches 22a et 22b formées sur le bord supérieur des plaques 18a et 18b respectivement présentent ici des formes en arc de cercle.

Une autre différence entre le premier et le deuxième modes de réalisation de l'invention concerne le fait que, dans ce dernier cas, la fixation du servomoteur sur le tablier du véhicule est assurée par un ensemble vis-écrou unique disposé en dessous de l'axe du servomoteur, qui coopère avec la tige 20 logée dans les encoches 22a, 22b, pour la tenue à l'arrachage. Cet ensemble vis-écrou comporte un écrou 24, soudé sur la face extérieure de la plaque 16a, et une vis 26. Lorsque l'assemblage est réalisé, la tête de la vis 26 est en appui sur la face extérieure de la plaque 16b et la vis traverse successivement des trous de même diamètre 16b1, 18b1, 18a1 formés dans les plaques 16b, 18b et 18a, avant d'être vissée par son extrémité dans l'écrou 24. De plus, afin d'éviter que les plaques 18a et 18b liées au tablier du véhicule ne se rapprochent l'une de l'autre lors de la fixation, une entretoise tubulaire 28 est placée entre ces plaques, autour de la vis 26.

Ce mode de réalisation des figures 3 et 4 présente sensiblement les mêmes avantages que le mode de réalisation des figures 1 et 2.

Dans le troisième mode de réalisation de l'invention illustré sur la figure 5, le servomoteur porte encore sur sa face arrière une paire de plaques parallèles en saillie 16a et 16b formées dans une tôle unique 16 et dont l'orientation reste inchangée par rapport aux deux précédents modes de réalisation. Le tablier du véhicule porte quant à lui deux plaques parallèles 18a et 18b qui font saillie vers l'avant de façon à pouvoir se placer de part et d'autre des plaques 16a et 16b. Plus précisément, lorsque le montage est réalisé, les faces intérieures des plaques 18a et 18b sont en contact avec les faces extérieures des plaques 16a et 16b, respectivement.

Ce troisième mode de réalisation de l'invention se distingue essentiellement des précédents par le fait que la fixation du servomoteur n'est plus assurée par des ensembles vis-écrous traversant successivement les quatre plaques mais par des ensembles vis-écrous traversant, d'une part les plaques adjacentes 16a et 18a et, d'autre part, les plaques adjacentes 16b et 18b.

Ainsi, un premier ensemble vis-écrou comprend un écrou 24a qui est soudé sur la face intérieure de la plaque 16a et une vis 26a dont la tête est en appui sur la face extérieure de la plaque 18a et qui traverse un trou formé dans cette plaque pour se visser dans l'écrou 24a.

Par ailleurs, un deuxième ensemble vis-écrou comprend un écrou 24b soudé sur la face intérieure de la plaque 16b et une vis 26b dont la tête est en appui sur la face extérieure de la plaque 18b et qui traverse un trou formé dans cette dernière avant de se visser dans l'écrou 24b.

Les vis 26a et 26b comportent des têtes à six pans creux présentant une forme extérieure de révolution. Sur la moitié supérieure de la figure 5, on a représenté une première variante de réalisation dans laquelle la vis 26b comporte une tête de forme extérieure cylindrique. Dans ce cas, cette tête vient avantageusement se loger dans un logement cylindrique complémentaire 30b forme dans la plaque 18b, par exemple par emboutissage.

Sur la partie inférieure de la figure 5, on a représenté une autre variante de réalisation dans laquelle la tête de la vis 26a présente une forme tronconique. Dans ce cas, la plaque 18a comporte sur sa face extérieure un logement tronconique 30a de forme complémentaire de celle de la tête de la vis 26a. Avantageusement, ce logement est formé également par emboutissage.

Bien entendu, l'invention n'est pas limitée aux modes de réalisation qui viennent d'être décrits à titre d'exemples, mais en couvre toutes les variantes. On comprendra notamment que les divers systèmes d'accrochage décrits en se référant notamment aux figures 1 et 3 peuvent s'appliquer indifféremment à chacun des trois modes de réalisation décrits. De façon comparable, dans le premier mode de réalisation décrit la fixation du servomoteur peut être assurée soit par un seul ensemble vis-écrou soit par deux ensembles vis-écrous identiques. Au contraire, dans le deuxième mode de réalisation, la fixation peut être assurée par deux ensembles vis-écrous qui peuvent être soit identiques, soit différents. On comprend également que les plaques parallèles liées, d'une part au servomoteur et, d'autre part, au tablier du véhicule, peuvent être soit formées dans une tôle unique comme cela a été décrit, soit formées dans deux tôles séparées, sans sortir du cadre de l'invention.

Enfin, les différents modes de réalisation décrits utilisent des éléments de support complémentaires se présentant sous la forme de plaques parallèles entre elles. Ces éléments pourraient être formés de plaques formant un angle déterminé avec l'axe du servomoteur, de pièces de révolution coaxiales, ou encore de pièces de section polygonale coaxiales.

## Revendications

1. Dispositif de montage d'un servomoteur (10) sur le tablier séparant un côté moteur et un côté habitacle d'un véhicule, et comprenant un moyen de support et un moyen de verrouillage dudit servomoteur par rapport audit tablier, ledit servomoteur étant disposé côté moteur dudit tablier et comprenant un boîtier dont une face arrière, sensiblement normale à l'axe dudit servomoteur fait face audit tablier, ledit moyen de support incluant un élément de support (16) solidaire de la face arrière dudit servomoteur, et coopérant avec un élément de support complémentaire (18) solidaire dudit tablier, ledit moyen de verrouillage (24a, 26a; 24b, 26; 24, 26) étant disposé côté moteur, caractérisé en ce que le dit moyen de verrouillage (24, 26) est constitué par au moins un ensemble vis-écrou dont l'axe est dans une direction orthogonale à celui du servomoteur.

2. Dispositif selon la revendication 1, caractérisé en ce que lesdits éléments de support sont constitués de deux paires de plaques (16a,16b;18a,18b) faisant saillie l'une vers l'autre, respectivement à partir de ladite face arrière et dudit tablier, les plaques de chaque paire étant disposées de part et d'autre dudit axe et espacées de telle manière qu'une surface de chaque plaque d'une paire est en contact avec une surface correspondante de chaque plaque de l'autre paire.

3. Dispositif selon la revendication 2, caractérisé en ce que lesdites plaques (16a,16b;18a,18b) sont parallèles entre elles.

4. Dispositif selon la revendication 2, caractérisé en ce que les plaques de chaque paire forment un angle déterminé avec ledit axe.

5. Dispositif selon l'une quelconque des revendications 1 à 4, caractérisé en ce que ledit élément de support (16) solidaire de ladite face arrière comporte un élément d'accrochage (20a,20b,20) coopérant avec ledit élément de support (18) solidaire dudit tablier.

6. Dispositif selon la revendication 1, caracrisé en ce que lesdits éléments de support sont constitués par des pièces de révolution coaxiales.

7. Dispositif selon la revendication 1, caractérisé en ce que lesdits éléments de support sont constitués par des pièces de section polygonale coaxiales.

8. Dispositif selon l'une quelconque des revendications 1 à 7, caractérisé en ce que ledit moyen de support inclut un moyen de positionnement axial relatif (22a,22b) des éléments de support.

9. Dispositif selon la revendication 8, caractérisé en ce que ledit moyen de positionnement axial est constitué par une encoche (22a,22b) pratiquée dans l'un (18) desdits éléments de support.

10. Dispositif selon l'une quelconque des revendications précédentes, caractérisé en ce que la vis (26a,26b) dudit au moins un ensemble vis-écrou (24a,26a;24b,26b) assure en outre un rôle d'entretoise.

11. Dispositif selon l'une quelconque des revendications 1 à 10, caractérisé en ce que la vis (26a,26b) dudit au moins un ensemble vis-écrou (24,26) est entourée par une entretoise (28).

12. Dispositif selon l'une quelconque des revendications 1 à 10, caractérisé en ce que la vis (26a,26b) dudit au moins un ensemble vis-écrou (24a,24b;26a,26b) ne traverse qu'en partie lesdits éléments de support (16,18).

13. Dispositif selon l'une quelconque des revendications 10 à 12, caractérisé en ce que l'écrou (24a,24b,24) est fixé sur l'élément de support (16) solidaire de ladite face arrière.

## Claims

1. Device for assembling a servomotor (10) on the bulkhead separating an engine side and a passenger side of a vehicle, and comprising a support means and a means for locking the said servomotor relative to the said bulkhead, the said servomotor being arranged on the engine side of the said bulkhead and comprising a housing, a rear surface of which, substantially perpendicular to the axis of the said servomotor, is located opposite the said bulkhead, the said support means including a support element (16) integral with the rear surface of the said servomotor and co-operating with a complementary support element (18) integral with the said bulkhead, the said locking means (24a, 26a; 24b, 26; 24, 26) being arranged on the engine side, characterised in that the said locking means (24, 26) consists of at least one screw/nut assembly, the axis of which is in a direction orthogonal to that of the servomotor.

2. Device according to Claim 1, characterised in that the said support elements consist of two pairs of plates (16a, 16b; 18a, 18b) which project towards each other, from the said rear surface and the said bulkhead respectively, the plates of each pair being arranged on either side of the said axis and spaced in such a way that one surface of each plate of a pair is in contact with a corresponding surface of each plate of the other pair.

3. Device according to Claim 2, characterised in that the said plates (16a, 16b; 18a, 18b) are parallel with each other.

4. Device according to Claim 2, characterised in that the plates of each form a predetermined angle with the said axis.

5. Device according to any one of Claims 1 to 4, characterised in that the said support element (16) integral with the said rear surface has a coupling element (20a, 20b, 20) co-opearing with the said support element (18) integral with the said bulkhead.

6. Device according to Claim 1, characterised in that the said support elements consist of coaxial parts of revolution.

7. Device according to Claim 1, characterised in that the same support elements consist of coaxial parts with a polygonal cross-section.

8. Device according to any one of Claims 1 to 7, characterised in that the said support means includes a means for relative axial positioning (22a, 22b) of the support elements.

9. Device according to Claim 8, characterised in that the said axial positioning means consists of a notch (22a, 22b) formed in one (18) of the said support elements.

10. Device according to any one of the preceding claims, characterised in that the screw (26a, 26b) of the said at least one screw/nut assembly (24a, 26a; 24b, 26b), acts moreover as a spacer.

11. Device according to any one of Claims 1 to 10, characterised in that the screw (26a, 26b) of the said at least one screw/nut assembly (24, 26) is surrounded by a spacer (28).

12. Device according to any one of Claims 1 to 10, characterised in that the screw (26a, 26b) of the said at least one screw/nut assembly (24a, 24b; 26a, 26b) only partly passes through the said support elements (16, 18).

13. Device according to any one of Claims 10 to 12, characterised in that the nut (24a, 24b, 24) is fixed onto the support element (16) integral with the said rear surface.

## Patentansprüche

1. Einrichtung zum Montieren eines Servomotors (10) an einer Spritzwand, die die Motorseite und die Insassenseite eines Fahrzeugs voneinander trennt und die eine Trägereinrichtung und eine Verriegelungseinrichtung für den genannten Servomotor in bezug auf die Spritzwand aufweist, wobei der Servomotor auf der Motorseite des Spritzwands angeordnet ist und ein Gehäuse aufweist, dessen im wesentlichen rechtwinklig zur Achse des genannten Servomotors stehende Rückseite der Spritzwand zugewandt ist, wobei die Trägereinrichtung ein Trägerelement (16) aufweist, das mit der Rückseite des Servomotors verbunden ist und mit einem zugehörigen, mit der Spritzwand verbundenen Trägerelement (18) zusammenwirkt, welche Verriegelungseinrichtung (24a, 26a; 24b, 26; 24, 26) auf der Motorseite angeordnet ist, dadurch gekennzeichnet, daß die Verriegelungseinrichtung (24, 26) durch mindestens eine Schrauben/Mutter-Anordnung gebildet ist, deren Achse in einer Richtung rechtwinklig zu der des Servomotors steht.

2. Einrichtung nach Anspruch 1, dadurch gekennzeichnet, daß die genannten Trägerelemente durch zwei Paare von Platten (16a, 16b; 18a, 18b) gebildet sind, die gegeneinander vorspringen, und zwar ausgehend von der genannten Rückseite bzw. vom Spritzwand, wobei die Platten jedes Paares zu den beiden Seiten der genannten Achse angeordnet sind und in solcher Weise voneinander beabstandet sind, daß eine Seite jeder Platte eines Paares mit einer zugehörigen Seite jeder Platte des anderen Paares in Berührung steht.

3. Einrichtung nach Anspruch 2, dadurch gekennzeichnet, daß die Platten (16a, 16b; 18a, 18b) parallel zueinander stehen.

4. Einrichtung nach Anspruch 2, dadurch gekennzeichnet, daß die Platten jedes Paares einen vorgegebenen Winkel zur genannten Achse bilden.

5. Einrichtung nach einem der Ansprüche 1 bis 4, dadurch gekennzeichnet, daß das genannte mit der genannten Rückseite verbundene Trägerelement (16) ein Festhakelement (20a, 20b, 20) aufweist, das mit dem mit der Spritzwand verbundenen Trägerelement (18) zusammenwirkt.

6. Einrichtung nach Anspruch 1, dadurch gekennzeichnet, daß die genannten Trägerelemente durch koaxiale rotationssymmetrische Teile gebildet sind.

7. Einrichtung nach Anspruch 1, dadurch gekennzeichnet, daß die genannten Trägerelemente durch koaxiale Teile mit polygonalem Querschnitt gebildet sind.

8. Einrichtung nach einem der Ansprüche 1 bis 7, dadurch gekennzeichnet, daß die Trägereinrichtung eine Einrichtung zum gegenseitigen axialen Positionieren (12a, 22b) der Trägerelemente aufweist.

9. Einrichtung nach Anspruch 8, dadurch gekennzeichnet, daß die Einrichtung zum axialen Positionieren durch eine Kerbe (22a, 22b) gebildet ist, die in einem (18) der genannten Trägerelemente ausgebildet ist.

10. Einrichtung nach einem der vorstehenden Ansprüche, dadurch gekennzeichnet, daß die Schraube (26a, 26b) zumindest einer Schrauben/Mutter-Anordnung (24a, 26a, 24b, 26b) darüber hinaus die Rolle einer Verbindungsstrebe einnimmt.

11. Einrichtung nach einem der Ansprüche 1 bis 10, dadurch gekennzeichnet, daß die Schraube (26a, 26b) zumindest einer Schrauben/Mutter-Anordnung (24, 26) von einer Verbindungsstrebe (28) umgeben ist.

12. Einrichtung nach einem der Ansprüche 1 bis 10, dadurch gekennzeichnet, daß die Schraube (26a, 26b) mindestens einer Schrauben/Mutter-Anordnung (24a, 24b; 26a, 26b) nur einen Teil der genannten Trägerelemente (16, 18) durchsetzt.

13. Einrichtung nach einem der Ansprüche 10 bis 12, dadurch gekennzeichnet, daß die Mutter (24a, 24b, 24) an dem mit der genannten Rückseite verbundenen Trägerelement (16) befestigt ist.

FIG.1

10  12  14  16  16a  16a1  16b  16b2  18  18a  18a1  18a2  18b  18b1  18b2  20a  20b  22a  22b  24a  24b  26a  26a1  26a2  26a3  26a4  26b  26b1  26b2  26b3

20a    20b

26a    26a3    24a    26a2

26a4                              26a1

16a

16 b

18a

24b                              18b

26b3

18    26b    26b2    26b1

**FIG. 2**

30b    18b

16b

24b

16    26 b    10

12    14

16a    26 a

24 a

30a

18a    **FIG. 5**

9

FIG. 3

FIG. 4